# EUROPEAN PATENT SPECIFICATION

(11) **EP 2 975 485 B1**
(45) Date of publication and mention of the grant of the patent: **19.12.2018**
(21) Application number: 14382277.3
(22) Date of filing: 15.07.2014
(51) Int. Cl.: G05D 7/06, G05D 16/20, E03B 7/07, F24D 3/10

(54) **Valve assembly suitable for automatically connecting a water supply network to a primary circuit**
Ventilanordnung zum automatischen Verbinden eines Wasserversorgungsnetzes mit einem Primärkreislauf
Ensemble de vannes adapté pour réaliser la connexion automatique d'un réseau d'alimentation en eau à un circuit primaire

(43) Date of publication of application: 20.01.2016
(73) Proprietor: ORKLI, S. COOP., 20240 Ordizia (Gipuzkoa) (ES)
(72) Inventor: Boronat Elizalde, Marco, 20008 Donostia- San Sebastian (ES); Gaztañaga Oyarbide, Kepa, 20001 Donostia- San Sebastian (ES)
(74) Representative: Igartua, Ismael

(56) References cited:
- EP-A2- 2 476 963
- GB-A- 2 377 745
- GB-A- 2 437 175
- US-A1- 2007 089 790

## Description

### TECHNICAL FIELD

The present invention relates to a valve assembly suitable for automatically connecting a water supply network to a primary circuit.

### PRIOR ART

Valve assemblies suitable for connecting a water supply network to a primary circuit are known in the state of the art, said primary circuit essentially being a heating circuit. Said valve assemblies comprise non-return valves preventing water in the primary circuit from returning to the domestic water network. Furthermore, in addition to the non-return valves, some valve assemblies comprise a disconnection element to assure that the water circulating through the heating circuit will seep out and not return to the domestic network if one of the non-return valves fails.

GB2377745A discloses a system for automatically filling the primary circuit comprising, in addition to the preceding elements, a control valve that allows opening or closing the passage of water towards the primary circuit. The control valve is actuated by means of an electronic control depending on the measurements detected by a sensor arranged in the heating circuit.

ES2404981A2 discloses a valve assembly suitable for connecting the water distribution network with the primary circuit. The valve assembly comprises a first body including an inlet conduit for the entry of water from the supply network, a second body including an outlet conduit suitable for conducting the incoming water to the primary circuit, a disconnection conduit suitable for disconnecting communication between the first body and second body, and opening/closing means for opening/closing the passage of water from the inlet conduit towards the second body. The opening/closing means are manually operated mechanical means having safety means closing the passage of water to the primary circuit when the user stops actuating the opening/closing means.

GB2437175A discloses a sealed water heating system for domestic application, includes a boiler for heating fluid contained within the heating system, a valve arrangement for controlling the flow of mains water into the heating system and a control means. The control means monitors the condition of the heating system and/or mains supply and controls the valve arrangement so as to selectively control the flow of mains water into the heating system and hence reduce the need for service visits. The control is in response to at least one monitored value such as the pressure of the fluid in the heating system. If the pressure drops below a predetermined level the valve arrangement is opened by the control means to allow mains water to be supplied. The heating system and the control means therefor may also be used in a method of controlling the heating system.

EP2476963A2 discloses a method for filling and refilling of water in water circuit for heating circuit, comprising a valve which when it is opened allows the water circulation, a pressure sensor which detect the water pressure, the valve being opened when the pressure falls under a first limiting value being closed if the pressure reaches to a second limiting value, and a temperature sensor which measures the temperature of the current water. The measured water temperature is transmitted to a control unit, the limiting values for the pressure being determined, depending on the determined water temperature.

US2007/089790A1 discloses an assembly for feeding water from a water supply into heating systems having a drinking water heater and a heating circulation installation includes a water inlet to be connected to the water supply, a first outlet with a first shut-off valve to be connected to the water heater, and a second outlet with a second shut-off valve to be connected to the heating circulation installation. A differential pressure controlled outlet valve between two backflow preventers forms a system disconnector between the water inlet and the second outlet for physically disconnecting the water supply from the heating circulation installation. This arrangement uses only one water connection to supply both the drinking water heater and the heating circulation installation.

### DISCLOSURE OF THE INVENTION

The object of the invention is to provide a valve assembly suitable for automatically connecting a water supply network to a primary circuit as defined in the claims.

The valve assembly according to the invention comprises a first body including an inlet conduit for the entry of water from the supply network, a second body including an outlet conduit for the exit of water, suitable for conducting the incoming water to the primary circuit, opening/closing means for opening/closing the passage of water from the inlet conduit towards the second body, and non-return means arranged such that they prevent the passage of water from the primary circuit to the supply network to the primary circuit..

The valve assembly comprises a fill pressure regulating device housed in the second body through which the maximum pressure of the water in the primary circuit is defined, the fill pressure regulating device comprising a movable member which can be moved by the pressure of the primary circuit, said movable member comprising a magnetic element. Furthermore, the valve assembly comprises a control device comprising a sensor cooperating with the magnetic element to detect a predetermined minimum pressure in the primary circuit, said control device controlling the opening of the opening/closing means when the predetermined minimum pressure is detected. The sensor is arranged outside the filling pressure regulating device such that in a normal working position of the working position of the valve assembly, a magnetic field generated by the magnetic element is measured by the sensor.

The obtained valve assembly is a compact and autonomous unit integrating all the elements necessary to achieve automatic filling in said valve assembly. It is a valve assembly that can be easily installed and replaced. Furthermore, it allows replacing manually filled conventional valve assemblies by automatically filled assemblies in pre-existing installations in a simple and economical manner.

These and other advantages and features of the invention will become evident in view of the drawings and the detailed description of the invention.

### DESCRIPTION OF THE DRAWINGS

Figure 1 shows a top view of an embodiment of a valve assembly according to the invention.
Figure 2 shows a sectioned view according to section line I-I of the valve assembly shown in Figure 1 in a position corresponding to a low-pressure primary circuit.
Figure 3 shows a sectioned view according to section line II-II of the valve assembly shown in Figure 1 in a position corresponding to a low-pressure primary circuit.
Figure 4 shows another sectioned view according to section line I-I of the valve assembly shown in Figure 1 in a position corresponding to a high-pressure primary circuit.

### DETAILED DISCLOSURE OF THE INVENTION

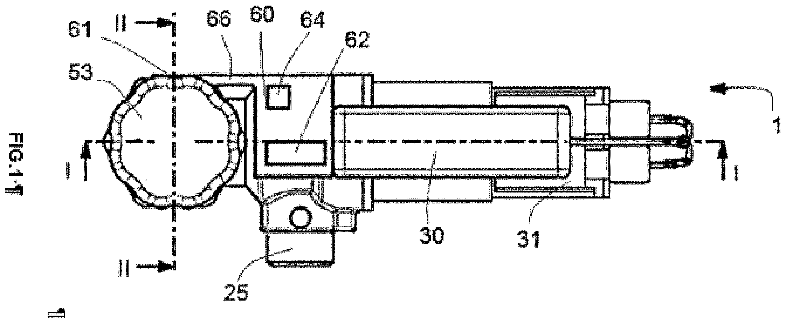

Figures 1 to 4 show an embodiment of a valve assembly 1 suitable for connecting a water supply network to a primary circuit according to the invention, neither the primary circuit nor the water supply network is depicted in the drawings, the primary circuit preferably being a heating circuit.

The valve assembly 1 comprises a first body 10 comprising an inlet conduit 11 for the entry of water from the supply network, a second body 20 comprising an outlet conduit 21 suitable for conducting the incoming water towards the heating circuit, an opening/closing valve 31 controlling the passage of water from the supply network to the heating circuit, and non-return valves 40 housed in the second body 20 and arranged to prevent water in the heating circuit from returning to the water supply network.

In the embodiment shown in the drawings, the inlet conduit 11 for the entry of water from the network and the outlet conduit 21 for the exit of water towards the primary circuit are arranged substantially parallel to one another. In other non-depicted embodiments, the inlet conduit 11 and the outlet conduit 21 can be arranged substantially aligned with one another.

The first valve body 10 further comprises an outlet conduit 12 through which the water coming in through the inlet conduit 11 exits, and a housing 13 in which the opening/closing valve 31 is housed. The inlet conduit 11 communicates with the outlet conduit 12 through the housing 13, the opening/closing valve 31 being in a closed position, such that a sealing element 33 thereof seals the entry to the outlet conduit 12 in a normal working position of the valve body 1 in which the passage of water from the network to the primary circuit is closed. In the embodiment shown in the drawings, the outlet conduit 12 and the opening/closing valve 31 are arranged substantially coaxial to one another, the inlet conduit 11 being arranged substantially orthogonal to the outlet conduit 12 and to the housing 13. In other non-depicted embodiments, the inlet conduit 11 can be arranged substantially aligned with the outlet conduit 12, the opening/closing valve 31 being arranged substantially orthogonal to both conduits 11 and 12.

The opening/closing valve 31 is preferably an electromagnetic safety valve known in the state of the art, so it is not considered necessary to include a particular description for said valve. The valve assembly 1 further comprises power supply means 30 electrically connected to the opening/closing valve 31. Said power supply means 30 power said safety valve 30, keeping it energized to allow the passage of water from the distribution network to the heating circuit during the primary circuit fill operation. In the particular embodiment shown in the drawings, the power supply means 30 comprise a battery. The obtained valve assembly 1 is therefore completely autonomous. The battery 30 includes a projection 32 suitable for being coupled to a projection 14 of the first body 10. In the embodiment shown in the drawings, the battery 30 is fixed to the outside of the first body 10 by joining the projection 14 of the first body 10 and the projection 32 of the battery 30 by means of clamping, the battery 30 being electrically connected to the opening/closing valve 31.

In addition, the second body 20 comprises an inlet conduit 22 in which two non-return valves 40 are housed. The non-return valves 40 comprise a support 41 which is inserted into the inlet conduit 22 of the second body 20, both non-return valves 40 being arranged in series, supported in said support 41.

Non-return valves 40 are known in the state of the art, so it is not considered necessary to describe them in detail.

The second body 20 is screwed into the first body 10 such that the outlet conduit 12 of the first body 10 communicates with the inlet conduit 22 of the second body 20. The valve assembly 1 further comprises a sealing element 43 assuring the leaktightness in the closure between both bodies 10 and 20. In the embodiment shown in the drawings, the sealing element 43 is a disc with a hole 44. When the valve assembly 1 operates in the normal working position, the sealing element 42 of one of the non-return valves 40 partially traverses the sealing element 43 through the hole 44, preventing the water that may be in the outlet conduit 12 of the first body 10 from going into the second body 20. When the valve assembly 1 operates in a low-pressure position in which the pressure of the heating circuit is lower than a predetermined pressure, the sealing element 42 of one of the non-return valves 40 is moved by the water circulating through the outlet conduit 12 of the first body 10, which allows filling the heating circuit.

The valve assembly 1 further comprises a filling pressure regulating device 50 housed in the second body 20 through which the maximum pressure of the water in the primary circuit is defined. It is necessary to set the maximum pressure at which the heating circuit will work because otherwise the elements forming the heating circuit may be damaged.

In the embodiment shown in the drawings, the filling pressure regulating device 50 is arranged substantially aligned with the outlet conduit 21 of the second body 20. In other non-depicted embodiments, the filling pressure regulating device 50 can be arranged substantially orthogonal to the outlet conduit 21. Furthermore, the filling pressure regulating device 50 comprises a movable member 55 in turn comprising a magnetic element 56. In the embodiment shown in the drawings, said magnetic element 56 is a magnet.

The valve assembly 1 further comprises a control device 60 comprising a sensor 61 cooperating with the magnetic element 56 to detect a predetermined minimum pressure in the primary circuit. When said minimum pressure is detected, the control device 60 controls the opening of the opening/closing valve 31, allowing the passage of water from the network to the heating circuit in order to fill said heating circuit, increasing the pressure of said circuit again.

The filling pressure regulating device 50 further comprises a body 51 fixed to the second body 20, a regulating member 52 coupling the movable member 55 to the body 51 and through which the maximum pressure of the water in the primary circuit is set, an elastic element 57 between the movable member 55 and the regulating member 52, and a sealing element 54 arranged at one end of the movable member 55 suitable for sealing one end of the outlet conduit 21 of the second body 20 when it detects the predetermined minimum pressure in the primary circuit.

The substantially cylindrical body 51 is screwed to the second body 20. Furthermore, the filling pressure regulating device 50 comprises a lever 53 coupled to the regulating member 52. The regulating member 52 turns with the lever 53, being able to move axially with respect to it. The elastic element 57 is a preloaded spring the ends of which are housed, respectively, in a housing 52b of the regulating member 52 and in a housing 55e of the movable member 55.

In addition, the sealing element 54 is a membrane having a substantially cylindrical base 54a and further comprises an outer area 54b around the perimeter of the base 54a which is arranged such that it is trapped between the body 51 of the fill pressure regulating device 50 and the second body 20, sealing the attachment between both bodies 20 and 51. The base 54a is thicker than the outer area 54b, said outer area 54b being more flexible than the base 54a.

In addition, the movable member 55 comprises another housing 55b in which the magnet 56 is housed, and a base 55a which is supported on the base 54a of the sealing element 54. The movable member 55 is arranged concentric to the regulating member 52. The movable member 55 partially traverses the regulating member 52, being movable in the axial direction with respect to said regulating member 52.

The housing 55b in which the magnet 56 is inserted is arranged in a rod 59, the base 55a being arranged at one end of the rod 59. Furthermore, the movable member 55 comprises an annular projection 55d extending perimetrically from the base 55a, substantially concentric to the rod 59, defining the housing 55e in which one end of the elastic element 57 is arranged in a guided manner. In addition, the outer area 54b of the sealing element 54 has a first part, as a continuation of the base 54a, externally surrounding the annular projection 55d of the movable member 55.

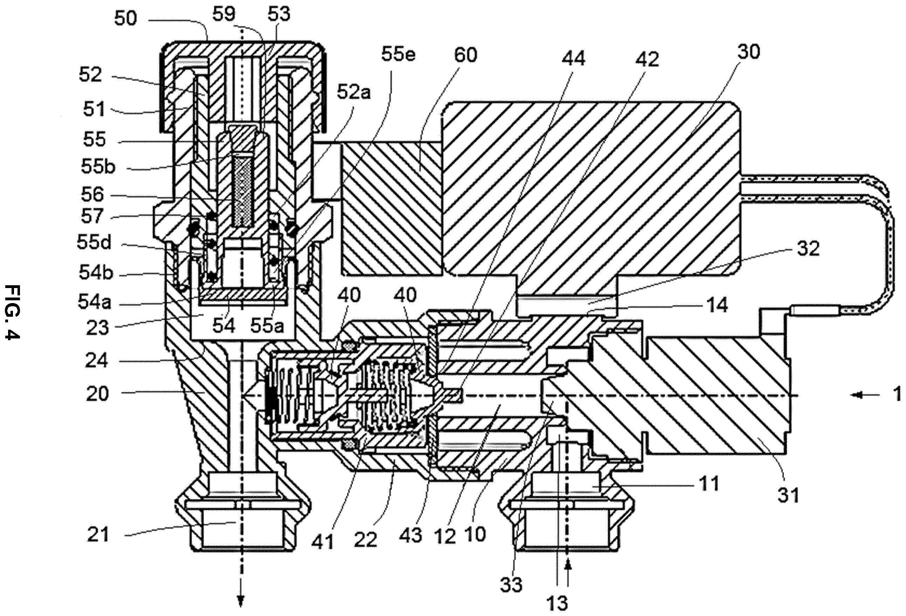

The installer can regulate the maximum pressure in the primary circuit through the lever 53 by positioning the regulating member 52 with respect to the body 51 of the filling pressure regulating device 50, such that said regulating member 52 exerts maximum pressure on the sealing element 54 through the elastic element 57. Upon rotating said lever 53, the regulating member 52 moves, compressing the preloaded elastic element 57 acting on the movable member 55, and therefore on the sealing element 54. When the valve assembly 1 operates in a normal working position, i.e., when the pressure in the primary circuit is higher than the pre-established minimum pressure, position shown in Figure 4, the opening/closing valve 31 closes the passage of water from the inlet conduit 11 of the first body 10 to the second body 20. Furthermore, the elastic element 57 of the filling pressure regulating device 50 closes on a seat 24 in the housing 23 of the second body 20.

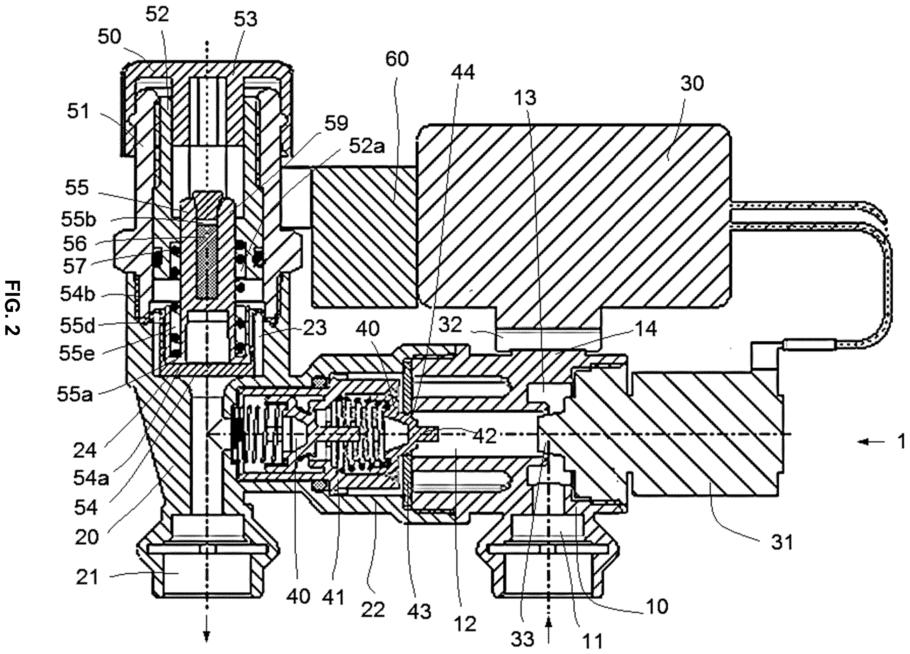

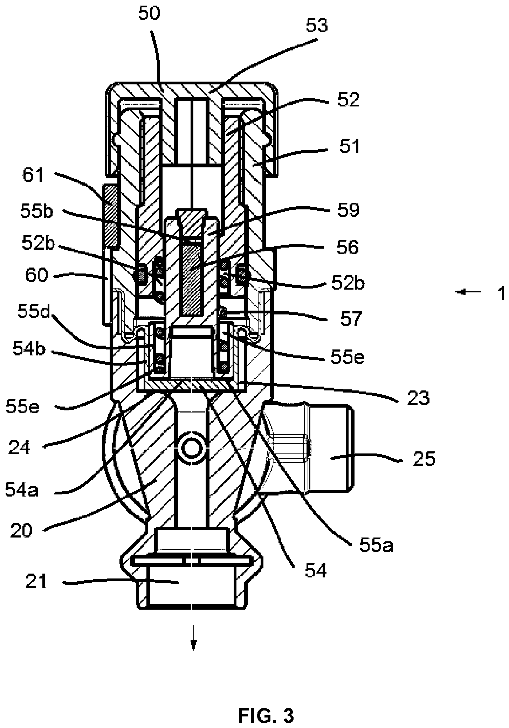

When the pressure in the primary circuit starts to drop, the movable member 55 is moved together with the sealing element 54 towards the seat 24 since the pressure exerted by the elastic element 57 exceeds that exerted by the water in the primary circuit. The filling pressure regulating device 50 is designed such that when the pressure in the primary circuit reaches the predetermined minimum pressure, the sealing element 54 of the fill pressure regulating device 50 closes on the seat 24 as shown in Figures 2 and 3. The seat 24 defines the travel stop of the unit formed by the sealing element 54 and the movable member 55.

When the movable member 55 moves, the magnet 56 also moves. The sensor 61 of the control device 60 is in turn arranged outside the fill pressure regulating device 50 such that in the normal working position of the valve assembly 1, the magnetic field generated by the magnet 56 is measured by the sensor 61. When the pressure in the primary circuit is low, the magnet 56 moves away from the sensor 61, which causes a change in the measurement of the sensor 61. When said change corresponds with having reached the minimum pressure in the primary circuit, the control device 60 controls the opening/closing valve 31 so that it opens and allows the passage of water to the primary circuit.

The control device 60 is arranged in a printed circuit board not shown in detail in the drawings, which is in turn arranged inside a support 66, schematically depicted in Figure 1, which will be fixed to one of the bodies 10 or 20 of the valve assembly 1.

In addition, the sensor 61 is a Hall effect sensor, creating an outgoing voltage proportional to the product of the force of the magnetic field when current flows through the sensor and approaches the magnetic field flowing orthogonally to the sensor 61. In other embodiments, the sensor 61 can be a reed switch. It is an electrical switch activated by a magnetic field which opens or closes in the presence of said magnetic field.

In addition, the control device 60 can comprise at least one display which can visually show if the minimum pressure has been reached in the primary circuit. Furthermore, it can comprise an alarm device 62 which allows warning users of leaks in the primary circuit. The alarm device 62 can be a visual alarm perceived through a display, a sound alarm or any other known type of alarm. The alarm device 62 can show, for example, the time during which the primary circuit has been filling within a certain period, report whether filling is taking place or the battery is running out, for example.

If the fill time exceeds a pre-established value considered as normal, or if for example, the number of times the primary circuit is filled within a specific period exceeds a pre-established value considered as normal, the control device 60 warns the user through the alarm device 62. If the user ignores said warning, the control device 60 acts like a safety device by controlling the closing of the opening/closing valve 31, blocking the passage of water to the primary circuit.

The control device 60 can also include a button 64 which can work as a reset button, such that if the user holds the button for a specific time period, the primary circuit will begin to fill, or it can be used as an unlock button allowing the user to unlock the system which has been locked for safety reasons.

In the embodiment shown in the drawings, the first body 10 is made of brass, whereas the second body 20 is made of a plastic material.

Finally, in the embodiment shown in the drawings, the valve assembly 1 further comprises a disconnection conduit 25 suitable for disconnecting communication between the first body 10 and the second body 20 to prevent the water in the primary circuit from returning to the network due to a failure in the operation of the non-return valves 40. In other embodiments, the valve assembly may not include said disconnection conduit 14.

The obtained valve assembly 1 can directly and quickly replace conventional manually operated valve assemblies, maintenance also being minimum.

## Claims

1. Valve assembly suitable for automatically connecting a water supply network to a primary circuit, comprising a first body (10) including an inlet conduit (11) for the entry of water from the supply network, a second body (20) including an outlet conduit (21) for the exit of water, suitable for conducting the incoming water to the primary circuit, opening/closing means (31) for opening/closing the passage of water from the inlet conduit (11) towards the second body (20), non-return means (40) arranged such that they prevent the passage of water from the primary circuit to the supply network, a filling pressure regulating device (50) comprising a movable member (55) which can be moved by the pressure of the primary circuit, and a control device (60) which controls the opening of the opening/closing means (31) when a predetermined minimum pressure is detected in the primary circuit, **characterized in that** the filling pressure regulating device (50) through which the maximum pressure of the water in the primary circuit is defined, is housed in the second body (20), the movable member (55) of the filling pressure regulating device (50) comprising a magnetic element (56), and **in that** the control device (60) comprises a sensor (61) cooperating with the magnetic element (56) to detect a predetermined minimum pressure in the primary circuit, the sensor (61) being arranged outside the filling pressure regulating device (50) such that in a normal working position of the working position of the valve assembly (1), a magnetic field generated by the magnetic element (56) is measured by the sensor (61).

2. Valve assembly according to the preceding claim, wherein the sensor (61) is a Hall effect sensor.

3. Valve assembly according to claim 1, wherein the sensor (61) is a reed switch.

4. Valve assembly according to any of the preceding claims, wherein the filling pressure regulating device (50) comprises a body (51) fixed to the second body (20), a regulating member (52) coupling the movable member (55) to the body (51) and through which the maximum pressure of the water in the primary circuit is set, an elastic element (57) between the movable member (55) and the regulating member (52), and a sealing element (54) arranged at one end of the movable member (55).

5. Valve assembly according to the preceding claim, wherein the movable member (55) comprises a housing (55b) in which the magnetic element (56) is housed and a base (55a) which is supported on a base (54a) of the sealing element (54), the movable member (5) at least partially traversing the regulating member (52) and being movable with respect to said regulating member (52).

6. Valve assembly according to the preceding claim, wherein the sealing element (54) is a membrane the base (54a) of which is substantially cylindrical, and further comprises an outer area (54b) around the perimeter of the base (54a) which is thinner than the base (54a) and is arranged such that it is trapped between the body (51) of the filling pressure regulating device (50) and the second body (20).

7. Valve assembly according to any of claims 4 to 6, wherein the filling pressure regulating device (50) comprises a lever (53) coupled to the regulating member (52) through which the maximum pressure in the primary circuit is limited by positioning the regulating member (52) with respect to the body (51) of the filling pressure regulating device (50) such that said regulating member (52) exerts maximum pressure on the sealing element (54) through the elastic element (57).

8. Valve assembly according to any of the preceding claims, wherein the filling pressure regulating device (50) is arranged substantially aligned with the outlet conduit (21) of the second body (20).

9. Valve assembly according to any of the preceding claims, comprising power supply means (30) electrically connected to the opening/closing means (31) and coupled to the outside of the first body (10).

10. Valve assembly according to any of the preceding claims, wherein the opening/closing means (31) comprise a battery-powered electromagnetic safety valve.

11. Valve assembly according to any of the preceding claims, wherein the control device (60) comprises an alarm device (62) to warn users of leaks in the primary circuit.

## Patentansprüche

1. Ventilanordnung, die zum automatischen Verbinden eines Wasserversorgungsnetzes mit einem Primärkreislauf geeignet ist, umfassend einen ersten Körper (10) mit einer Einlassleitung (11) für den Eintritt von Wasser aus dem Versorgungsnetz, einen zweiten Körper (20) mit einer Auslassleitung (21) für den Austritt von Wasser, geeignet zum Leiten des ankommenden Wassers zum Primärkreislauf, Öffnungs-/Schließmittel (31) zum Öffnen/Schließen des Durchgangs von Wasser von der Einlassleitung (11) in Richtung des zweiten Körpers (20), Rückflusssicherungsmittel (40), die derart angeordnet sind, dass sie den Durchgang von Wasser von dem Primärkreislauf zu dem Versorgungsnetz verhindern, eine Fülldruckregelvorrichtung (50), die ein bewegliches Element (55) umfasst, das durch den Druck des Primärkreislaufs bewegt werden kann, und eine Steuervorrichtung (60), die das Öffnen der Öffnungs-/Schließmittel (31) steuert, wenn ein vorbestimmter Mindestdruck in dem Primärkreislauf detektiert wird, **dadurch gekennzeichnet, dass** die Fülldruckregelvorrichtung (50), durch die der Maximaldruck des Wassers im Primärkreislauf definiert wird, in dem zweiten Körper (20) untergebracht ist, wobei das bewegliche Element (55) der Fülldruckregelvorrichtung (50) ein Magnetelement (56) umfasst, und **dadurch, dass** die Steuervorrichtung (60) einen Sensor (61) umfasst, der mit dem Magnetelement (56) zusammenwirkt, um einen vorbestimmten Mindestdruck im Primärkreislauf zu detektieren, wobei der Sensor (61) außerhalb der Fülldruckregelvorrichtung (50) derart angeordnet ist, dass in einer normalen Arbeitsposition der Arbeitsposition der Ventilanordnung (1) ein vom Magnetelement (56) erzeugtes Magnetfeld von dem Sensor (61) gemessen wird.

2. Ventilanordnung nach dem vorhergehenden Anspruch, wobei der Sensor (61) ein Hall-Effekt-Sensor ist.

3. Ventilanordnung nach Anspruch 1, wobei der Sensor (61) ein Reedschalter ist.

4. Ventilanordnung nach einem der vorhergehenden Ansprüche, wobei die Fülldruckregelvorrichtung (50) einen Körper (51), der an dem zweiten Körper (20) befestigt ist, ein Regelelement (52), welches das bewegliche Element (55) mit dem Körper (51) koppelt und durch das der Maximaldruck des Wassers in dem Primärkreislauf eingestellt ist, ein elastisches Element (57) zwischen dem beweglichen Element (55) und dem Regelelement (52) und ein Dichtungselement (54), das an einem Ende des beweglichen Elements (55) angeordnet ist, umfasst.

5. Ventilanordnung nach dem vorhergehenden Anspruch, wobei das bewegliche Element (55) ein Gehäuse (55b), in dem das Magnetelement (56) untergebracht ist, und eine Basis (55a), die auf einer Basis (54a) des Dichtungselements aufliegt (54), umfasst, wobei das bewegliche Element (5) das Regelelement (52) zumindest teilweise durchquert und in Bezug auf das Regelelement (52) bewegbar ist.

6. Ventilanordnung nach dem vorhergehenden Anspruch, wobei das Dichtungselement (54) eine Membran ist, deren Basis (54a) im Wesentlichen zylindrisch ist, und das ferner einen äußeren Bereich (54b) um den Umfang der Basis (54a) umfasst, der dünner ist als die Basis (54a) und derart angeordnet ist, dass er zwischen dem Körper (51) der Fülldruckregelvorrichtung (50) und dem zweiten Körper (20) eingeschlossen ist.

7. Ventilanordnung nach einem der Ansprüche 4 bis 6, wobei die Fülldruckregelvorrichtung (50) einen Hebel (53) umfasst, der mit dem Regelelement (52) gekoppelt ist und durch den der Maximaldruck im Primärkreislauf durch Positionieren des Regelelements (52) in Bezug auf den Körper (51) der Fülldruckregelvorrichtung (50) derart begrenzt wird, dass das Regelelement (52) einen Maximaldruck auf das Dichtungselement (54) durch das elastische Element (57) ausübt.

8. Ventilanordnung nach einem der vorhergehenden Ansprüche, wobei die Fülldruckregelvorrichtung (50) im Wesentlichen fluchtend mit der Auslassleitung (21) des zweiten Körpers (20) angeordnet ist.

9. Ventilanordnung nach einem der vorhergehenden Ansprüche, umfassend eine Stromversorgungsvorrichtung (30), die elektrisch mit den Öffnungs-/Schließmitteln (31) verbunden und mit der Außenseite des ersten Körpers (10) gekoppelt ist.

10. Ventilanordnung nach einem der vorhergehenden Ansprüche, wobei die Öffnungs-/Schließmittel (31) ein batteriebetriebenes elektromagnetisches Sicherheitsventil umfassen.

11. Ventilanordnung nach einem der vorhergehenden Ansprüche, wobei die Steuervorrichtung (60) eine Alarmvorrichtung (62) umfasst, um Benutzer vor Lecks in dem Primärkreislauf zu warnen.

## Revendications

1. Ensemble de vannes adapté pour réaliser la connexion automatique d'un réseau d'alimentation en eau à un circuit primaire, comprenant un premier corps (10) incluant un conduit d'admission (11) pour l'entrée d'eau provenant du réseau d'alimentation, un second corps (20) incluant un conduit de sortie (21) pour l'évacuation de l'eau, apte à conduire l'eau entrante vers le circuit primaire, des moyens d'ouverture/fermeture (31) pour ouvrir/fermer le passage de l'eau du conduit d'entrée (11) vers le second corps (20), des moyens de non-retour (40) agencés de manière à empêcher le passage de l'eau du circuit primaire au réseau d'alimentation, un dispositif de régulation de pression de remplissage (50) comprenant un élément mobile (55) pouvant être déplacé par la pression du circuit primaire, et un dispositif de commande (60) qui commande l'ouverture des moyens d'ouverture/fermeture (31) lorsqu'une pression minimale prédéfinie est détectée dans le circuit primaire, **caractérisé en ce que** le dispositif de régulation de pression de remplissage (50) à travers lequel la pression maximale de l'eau dans le circuit primaire est définie, est logé dans le second corps (20), l'élément mobile (55) du dispositif de régulation de pression de remplissage (50) comprenant un élément magnétique (56), et **en ce que** le dispositif de commande (60) comprend un capteur (61) coopérant avec l'élément magnétique (56) pour détecter une pression minimale prédéfinie dans le circuit primaire, le capteur (61) étant agencé à l'extérieur du dispositif de régulation de pression de remplissage (50) de telle sorte qu'en position de travail normale de l'ensemble de vannes (1), un champ magnétique généré par l'élément magnétique (56) soit mesuré par le capteur (61).

2. Ensemble de vannes selon la revendication précédente, dans lequel le capteur (61) est un capteur à effet Hall.

3. Ensemble de vannes selon la revendication 1, dans lequel le capteur (61) est un commutateur à lames.

4. Ensemble de vannes selon l'une quelconque des revendications précédentes, dans lequel le dispositif de régulation de pression de remplissage (50) comprend un corps (51) fixé au second corps (20), un élément de régulation (52) accouplant l'élément mobile (55) au corps (51) et à travers lequel est réglée la pression maximale de l'eau dans le circuit primaire, un élément élastique (57) entre l'élément mobile (55) et l'élément de régulation (52), et un élément d'étanchéité (54) agencé au niveau d'une extrémité de l'élément mobile (55).

5. Ensemble de vannes selon la revendication précédente, dans lequel l'élément mobile (55) comprend un logement (55b) dans lequel est logé l'élément magnétique (56) et une base (55a) qui est supportée sur une base (54a) de l'élément d'étanchéité (54), l'élément mobile (5) traversant au moins partiellement l'élément de régulation (52) et pouvant être déplacé par rapport audit élément de régulation (52).

6. Ensemble de vannes selon la revendication précédente, dans lequel l'élément d'étanchéité (54) est une membrane dont la base (54a) est sensiblement cylindrique et comprend en outre une zone extérieure (54b) autour du périmètre de la base (54a) qui est plus mince que la base (54a) et est disposée de manière à être coincée entre le corps (51) du dispositif de régulation de pression de remplissage (50) et le second corps (20).

7. Ensemble de vannes selon l'une quelconque des revendications 4 à 6, dans lequel le dispositif de régulation de pression de remplissage (50) comprend un levier (53) accouplé à l'élément de régulation (52) à travers lequel la pression maximale dans le circuit primaire est limitée par positionnement de l'élément de régulation (52) par rapport au corps (51) du dispositif de régulation de pression de remplissage (50) de telle sorte que ledit élément de régulation (52) exerce une pression maximale sur l'élément d'étanchéité (54) à travers l'élément élastique (57).

8. Ensemble de vannes selon l'une quelconque des revendications précédentes, dans lequel le dispositif de régulation de pression de remplissage (50) est agencé sensiblement aligné sur le conduit de sortie (21) du second corps (20).

9. Ensemble de vannes selon l'une quelconque des revendications précédentes, comprenant un moyen d'alimentation électrique (30) connecté électriquement aux moyens d'ouverture/fermeture (31) et accouplé à l'extérieur du premier corps (10).

10. Ensemble de vannes selon l'une quelconque des revendications précédentes, dans lequel les moyens d'ouverture/fermeture (31) comprennent une vanne de sécurité électromagnétique alimentée par batterie.

11. Ensemble de vannes selon l'une quelconque des revendications précédentes, dans lequel le dispositif de commande (60) comprend un dispositif d'alarme (62) pour avertir des utilisateurs de fuites dans le circuit primaire.
